# EUROPEAN PATENT SPECIFICATION

(11) **EP 4 496 501 B1**
(45) Date of publication and mention of the grant of the patent: **02.09.2026**
(21) Application number: 23714215.3
(22) Date of filing: 22.03.2023
(51) Int. Cl.: A47J 42/40, A47J 42/50

(54) **HOPPER FOR FEEDING COFFEE BEANS, CORRESPONDING GRINDING APPARATUS AND METHOD, AND MACHINE AND METHOD FOR PREPARING BEVERAGES**
TRICHTER ZUM ZUFÜHREN VON KAFFEEBOHNEN, ENTSPRECHENDE MAHLVORRICHTUNG UND VERFAHREN SOWIE MASCHINE UND VERFAHREN ZUR ZUBEREITUNG VON GETRÄNKEN
TRÉMIE POUR L'ALIMENTATION EN GRAINS DE CAFÉ, APPAREIL ET PROCÉDÉ DE MOUTURE CORRESPONDANTS, ET MACHINE ET PROCÉDÉ DE PRÉPARATION DE BOISSONS

(30) Priority: 23.03.2022 SM 202200141
(43) Date of publication of application: 29.01.2025
(73) Proprietor: De' Longhi Appliances S.r.l. Con Unico Socio, 31100 Treviso (IT)
(72) Inventor: ZARATIN, Enrico, 31100 TREVISO (IT); ROSETTA, Simone, 31100 TREVISO (IT); ROSSETTO, Giovanni, 31100 TREVISO (IT); SANSON, Roberto, 31100 TREVISO (IT); PICCOLI, Igor, 31100 TREVISO (IT); FACCO, Marco, 31100 TREVISO (IT)
(74) Representative: Petraz, Davide Luigi
(86) International application number: PCT/EP2023/057392
(87) International publication number: WO 2023/180410

(56) References cited:
- EP-B1- 2 120 658
- CN-A- 108 478 043
- US-A1- 2017 112 324
- US-B2- 7 185 837

## Description

### FIELD OF THE INVENTION

The present invention concerns a hopper for feeding beans, in particular, but not only, coffee beans, to a grinding apparatus suitable to grind the beans with a desired granulometry. The present invention also concerns an apparatus and a method for grinding the beans, a machine and the corresponding method for preparing a beverage.

### BACKGROUND OF THE INVENTION

Domestic machines for preparing beverages, in particular coffee beverages, are known, comprising a hopper which can be connected in a fixed or removable manner to a grinding apparatus which receives the beans and produces a powder mixture with the desired granulometry.

Removable type hoppers allow consumers to be able to change the type of coffee beans to be used, and have a container provided with a lower outlet aperture, which can be closed by means of one or more closing elements, through which the coffee beans can enter the grinding apparatus.

When the lower aperture is open, the coffee beans fall by gravity into the grinding device, filling the available space, so that when the hopper is removed, both a certain quantity of coffee powder and a quantity of coffee beans to be ground remain in the grinding device.

Consequently, when changing the hopper or replacing the type of beans to be used, in order to prevent contamination between different types of beans, or to prevent spillage of the product, it is necessary to empty the grinding device manually, or to prepare a beverage with the remaining type of beans. Additionally, especially if the apparatus is not used for a certain time, the beans and powder that remain in the grinding device can deteriorate and lose their aroma.

To try to overcome these problems, solutions are known in which the quantity of coffee beans entering the grinding apparatus is measured by volumetric dosing devices.

Patent EP2777452B1 (EP'452) describes a hopper for containing coffee beans, which comprises a first part of a dosing chamber, while the second part is included in a grinding apparatus to which the hopper is connected, and the overall volume of the dosing chamber defines the quantity of beans for a single dose. The solution described in EP'452 provides to transport the beans toward the first part of the dosing chamber and toward an outlet aperture of the hopper by means of transport means disposed in the hopper and comprising a bottom wall and a plurality of blades which define respective rotatable vanes. The conformation of the transport means, however, has limitations since stopping them does not always correspond to an immediate stoppage of the exit of the beans. In the solution described in EP'452 this does not affect the accuracy of the dosage, since this solution provides a predefined volumetric dosage given by the complete filling of the dosing chamber. In the event that a volumetric dosing chamber is not provided, however, it is necessary to guarantee a rapid and reliable stoppage of the exit of the beans, which is also repeatable on every occasion. Furthermore, in the EP'452 solution, particles or fragments of coffee beans can accumulate between the rotatable bottom wall of the transport means and a fixed lower wall of the hopper, which can on the one hand create unwanted friction, reducing performance, and on the other hand can be difficult to clean. Another hopper according to the prior art is disclosed in US2017/112324.

In general, moreover, solutions with volumetric dosing devices do not allow adequate measurement of the quantity of beans fed and the doses of beans supplied to the grinding apparatus do not exactly correspond to the desired quantity of powder product. In fact, beans of different origin, particularly in the case of coffee beans, can have very different shapes and sizes, so that even the quantity by weight in the same volume can change a lot depending on the origin.

Furthermore, the solutions which provide to dose the beans in a volumetric manner do not allow to vary the quantity of beans per single dose in a simple and economical way.

There is therefore a need to perfect a hopper for feeding beans and a respective grinding apparatus and method, which can overcome at least one of the disadvantages of the state of the art.

To do this, it is necessary to solve the technical problem of providing a hopper suitable to feed the desired quantity of beans on each occasion to a grinding device, and an apparatus suitable to supply on each occasion the desired quantity of coffee powder required, without leaving residual beans inside the grinding device.

One purpose of the present invention is to provide a hopper which can be completely emptied in a simple and effective way.

Another purpose of the present invention is to provide a grinding apparatus and method which allow to change the variety of beans, or in general the dry food substance to be used, preventing contamination with the previous one.

Another purpose of the present invention is to provide a grinding apparatus and method which allow the quantity of beans to be varied for a single dose according to requirements.

Another purpose of the present invention is to perfect a machine and a method for preparing a beverage which allow the grinding device to be kept substantially empty between two successive beverage preparations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes and to solve the above technical problem in a new and original way, also obtaining considerable advantages compared to the state of the prior art, a hopper for feeding beans according to the present invention comprises a container having an outlet aperture with which there is associated, at the lower part, a closing bottom provided with a passage aperture and disposed rotatable with respect to the container in order to selectively open and close the outlet aperture for the beans, and feed means which can be selectively driven to feed the beans toward the outlet aperture.

According to one aspect of the present invention, the feed means comprise a feed member rotatable around an axis of rotation, which is inclined with respect to a vertical axis by an angle of inclination comprised between 3° and 20°, and comprising a single blade.

The inclination of the axis of rotation, and therefore of the blade, allows to convey the beans toward the outlet aperture more effectively.

Furthermore, the presence of a single blade reduces any frictions caused by the beans and also the number of interstices and accumulation points of powder or grain fragments, so that the hopper as a whole is more efficient and easier to clean.

According to some embodiments, the blade has a helical development around the axis of rotation. This conformation advantageously allows to lift the beans during the rotation, facilitating their transfer toward the outlet aperture.

Preferably, the outlet aperture is laterally offset with respect to the zone affected by the feed means, and around the outlet aperture there is provided a step with the purpose of preventing the beans from escaping spontaneously.

Thanks to the helical conformation of the blade, it is possible to create a higher step than what is normally provided, so as to guarantee that the travel of the beans is stopped when the feed means are stopped.

Some embodiments described here also concern a grinding apparatus comprising a hopper and a grinding device for grinding the beans into powder.

According to one aspect of the invention, the grinding apparatus comprises drive means which can be selectively driven to make the feed means rotate, detection configured to detect a quantity of beans fed by the feed means, and a control and command unit configured to command the drive at least of the feed means and of the grinding device as a function of the data detected by the detection means.

This achieves the advantage of creating a grinding apparatus that allows to measure the exact quantity of beans that is fed to the grinding device and therefore ground.

According to some embodiments, the detection means comprise one or more of weighing means associated with at least one of either the hopper or the grinding device or position sensors associated with said feed means.

Thanks to the presence of the weighing means and/or the position sensors, unlike systems with volumetric dosing devices, it is possible to vary the quantity of beans for a single dose as a function of requirements, substantially continuously, without being bound to pre-established discrete doses.

In accordance with another aspect of the present invention, the weighing means comprise, or consist of, load cells and/or dynamometers.

In accordance with another aspect of the present invention, the weighing means are connected to a mobile portion of a support structure of the apparatus and they are associated with a fixed portion of the support structure by means of mechanical support means configured in such a way as to keep the grinding device, or respectively a housing compartment of the hopper, floating with respect to the support structure and allow its weighing.

According to some embodiments, there are provided end-of-travel members between the grinding device, or the housing compartment, or a component integral with one or the other of them, and the fixed portion, which are configured to limit the travel of the grinding device, or the housing compartment, in such a way as to prevent excessive stresses on the load cells.

In accordance with another aspect of the present invention, the drive means are associated with a support structure of the apparatus and they are disposed outside the hopper.

According to other embodiments, the apparatus comprises a housing compartment provided with coupling and clamping means configured to cooperate with the container and with the closing bottom in order to clamp the hopper and open the outlet aperture.

According to some embodiments, the housing compartment comprises a cover door suitable to selectively close a transit channel for the beans toward the grinding device when no hopper is inserted.

Advantageously, the door comprises first engagement members suitable to engage with corresponding second engagement members present on the container, in such a way that a rotation of the latter in one or the other sense involves a contextual movement of the door between an open condition and a closed condition.

In accordance with another aspect of the present invention, a grinding method for preparing a desired dose of powder starting from a bean substance comprises:
- receiving an indication regarding a desired value of a quantity of beans to be ground;
- driving feed means disposed inside the at least one hopper, in order to selectively feed the quantity of beans toward a grinding device;
- detecting a value of the quantity of beans fed by the feed means by means of detection means and sending a signal relating to the detected value to a control unit;
- stopping the feed means when the quantity of beans fed corresponds to the desired value.

According to some embodiments, the step of detecting a value of the quantity of beans fed by the feed means comprises:
- weighing, substantially continuously, an instantaneous value of the quantity of beans fed by the feed means and sending a signal relating to the instantaneous value to the control unit in order to compare the instantaneous value with the desired value;
- when the instantaneous value corresponds to the desired value, stopping the feed means and activating the grinding device, or keeping it active, in order to completely grind the quantity of beans and obtain the desired dose of powder.

By "instantaneous value" here and hereafter in the description we mean the value measured at the instant in which the weighing occurs. The weighing action is carried out substantially continuously by detecting, in succession one after the other, a plurality of samples of instantaneous values with a very high sampling frequency, for example 20-100 samples/second, so as to know the weight of the grinding device, or of the hopper, in real time.

In accordance with another aspect of the present invention, a machine for preparing coffee beverages comprises a grinding apparatus as described above, an infusion unit and at least one user interface provided with at least one display device by means of which a user can select a determinate beverage, set one or more characteristics of the latter, or select other options or operating modes.

In accordance with another aspect of the present invention, a method for preparing a beverage according to the present invention comprises at least: receiving a command for the preparation of a beverage in a machine for preparing coffee beverages, determining a desired value of the quantity of beans necessary and sufficient to prepare the selected beverage; preparing a desired dose of powder having a quantity corresponding to the desired value, wherein feed means disposed inside the hopper are driven to selectively feed said quantity of beans toward a grinding device; the detection means detect the value of the quantity of beans fed and send a signal relating to the detected value to a control unit, which compares it with preset values relating to the selected beverage stored in a storage device; when the detected value corresponds to the desired value relating to the selected beverage, the feed means are stopped, and the beans that have been fed are ground to obtain a powder to be fed to an infusion unit; a step in which the powder is subjected to infusion and the beverage is delivered.

According to embodiments, the detection of the quantity of beans is carried out by weighing means which weigh the instantaneous value of the quantity of beans fed.

Embodiments here disclosed concern also a hopper for feeding beans, comprising a container for the beans having an outlet aperture, a closing bottom provided with a passage aperture that in an opening condition, aligns with the outlet aperture and disposed rotatable with respect to said container in order to selectively open and close said outlet aperture, and feed means which are rotatable with respect to a rotation axis and can be selectively driven to feed said beans toward said outlet aperture, wherein said hopper comprises a plate having a bottom wall provided with said outlet aperture misaligned with respect to said axis of rotation, wherein around said outlet aperture there is disposed a protruding step.

Such step is intended to stop the travel of the beans when the feed means are stopped or are still, thus keeping the beans inside the hopper.

According to further embodiments, the bottom wall comprises a hollowed portion in proximity to said step, in particular on the side facing toward the axis of rotation. This conformation further helps to lock the beans inside the hopper when the feed means are stopped or are still.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a schematic and simplified representation of a machine for preparing beverages comprising a hopper and a grinding apparatus according to the present invention;
- fig. 2 is a section view of a hopper in accordance with a first embodiment of the present invention, in an open condition;
- fig. 2a is a section view of a part of a hopper in accordance with a second embodiment of the present invention, in a closed condition;
- fig. 2b is a section view of a hopper in accordance with a variant of embodiment, in an open condition, and of a housing compartment;
- fig. 3 is an exploded schematic view of a hopper of the grinding apparatus in accordance with some embodiments of the present invention;
- fig. 3a is a schematic view of the feed means of the hopper of fig. 2;
- fig. 3b is a schematic view of the feed means of the hopper of fig. 2a;
- fig. 3c is a section view along the line IIIc-IIIc of fig. 3c;
- fig. 4 is a perspective and schematic view of a grinding apparatus in accordance with a first embodiment;
- fig. 5 is a perspective and schematic view of a grinding apparatus in accordance with a second embodiment;
- fig. 6 is a bottom view of a hopper according to the invention with the outlet aperture of the beans in an open condition;
- fig. 7 is a three-dimensional view of the housing compartment of the machine of fig. 1 sectioned along a plane offset with respect to a median plane;
- fig. 8 is a three-dimensional view of the housing compartment of the machine of fig. 1 sectioned on a median plane and facing in the opposite direction with respect to the section of fig. 7, with the interference means in a first operating position;
- fig. 8a is a detailed view of a part of fig. 8 with the interference means in a second operating position;
- fig. 9 is a schematic bottom view of a closing door in accordance with a first embodiment;
- fig. 10 is a schematic top view of a closing door in accordance with a second embodiment.

We must clarify that in the present description the phraseology and terminology used, as well as the figures in the attached drawings also as described, have the sole function of better illustrating and explaining the present invention, their function being to provide a non-limiting example of the invention itself, the scope of protection being defined by the claims.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS OF THE PRESENT INVENTION

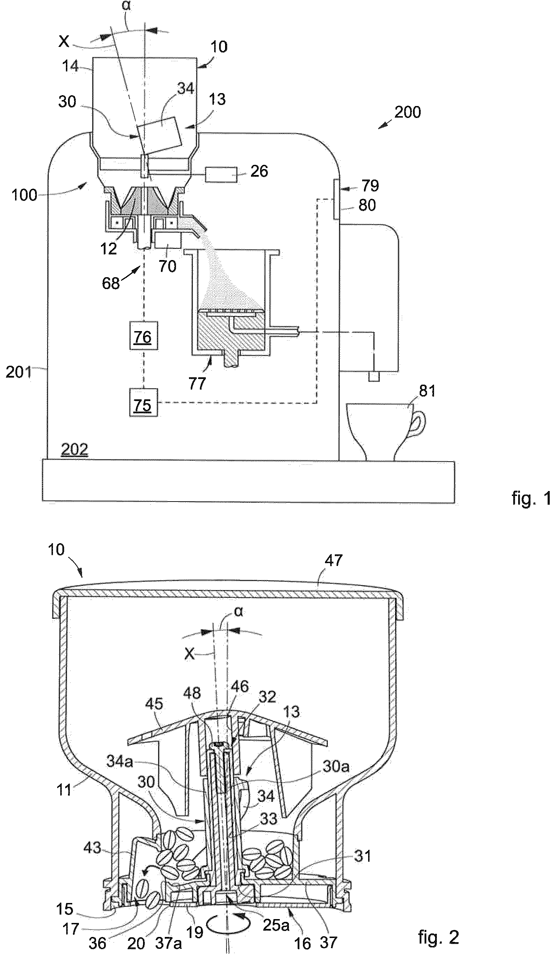

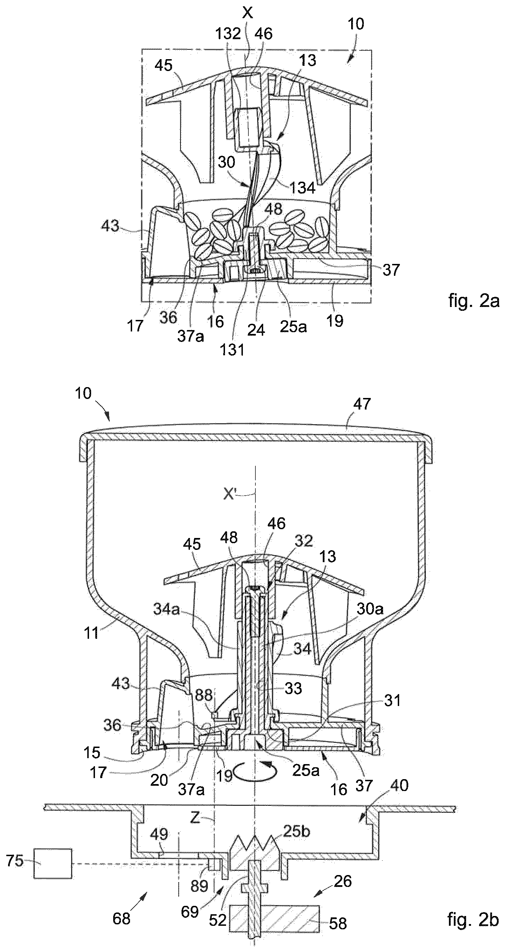

With reference to the attached drawings, a hopper 10 according to the invention is described, preferably of the removable type, suitable to contain and feed beans (figs. 2-3c).

By "beans" here and hereafter in the description we mean, in particular, coffee beans; however, other types of products are not excluded, for example seeds, cereals, grains of salt or pepper, or suchlike.

The hopper 10 can be integrated in or connected to a grinding apparatus 100 comprising a grinding device 12 configured to receive at entry a foodstuff substance in the form of beans, and grind it so as to obtain a powder mixture.

The grinding apparatus 100 can be autonomous, of the stand-alone type, or it can also be integrated in a machine 200 for preparing a beverage by infusing the mixture.

The hopper 10 comprises a container 14 to contain the beans, and it is provided with an outlet aperture 17 through which the beans can exit.

The container 14 is provided with a lower aperture 15 and the hopper 10 comprises a closing bottom 16 which is associated with the lower aperture 15 and is disposed rotatable with respect to the container 14 in order to selectively open and close the outlet aperture 17 of the beans.

The hopper 10 also comprises feed means 13, disposed inside the container 14, which can be selectively driven to feed the beans toward the outlet aperture 17.

According to some embodiments described with reference to figs 2, 2a, 3 and 5, the feed means 13 are disposed rotatable on an axis of rotation X inclined, with respect to a vertical axis, by an angle of inclination α which is optimized for the purposes of the functionality of the feed means 13, for example comprised between 3° and 20°, preferably between 5° and 10°.

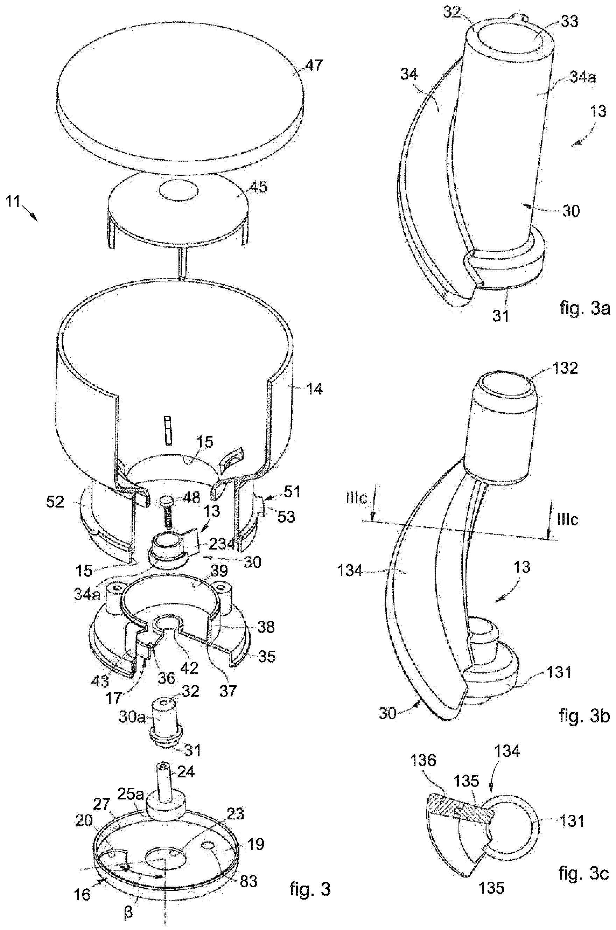

According to some embodiments, the axis of rotation X is inclined in the direction of the outlet aperture 17, or in a direction offset by an angle β comprised between 10° and 50° upstream of the position of the outlet aperture 17 with respect to the sense of rotation of the feed means 13 (fig. 3 shows the angle β in the case of a rotation in a clockwise sense).

According to other embodiments, for example illustrated in fig. 2b, the feed means 13 are disposed rotatable on an axis of rotation X' substantially vertical, which can coincide substantially with the central axis of the hopper 10.

The bottom 16 comprises a bottom wall 19 (figs. 2-3) in which a passage aperture 20 for the beans is made which, in the opening condition, aligns with the outlet aperture 17, while in the closing condition it is disposed offset with respect to the outlet aperture 17 and the latter is closed by the bottom wall 19.

The bottom wall 19 can also be provided with a central hole 23 through which a drive pin 24 is disposed in order to drive at least the feed means 13 from the outside of the hopper 10, that is, of the container 14, as will be described below.

The pin 24 is provided at the lower part with connection members 25a to connect, during use, to mating connection members 25b of drive means 26 associated with the apparatus 100.

For example, the drive means 26 can comprise, or consist of, one or more electric motors and are preferably associated with the support structure 18 outside the hopper 11.

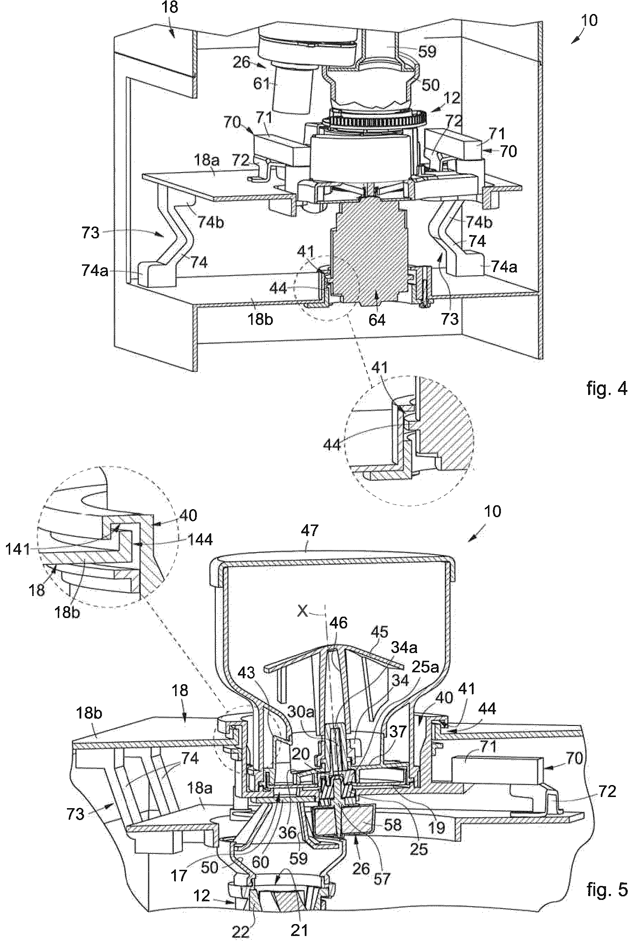

The drive means 26 can comprise a drive shaft 57 connected, directly or by means of one or more intermediate gears, to a drive member 58 and suitable to engage, with its own connection members 25b, with the connection members 25a of the drive pin 24 in order to make it rotate (fig. 5).

The bottom 16 can also comprise a lateral wall 27 and the passage aperture 20 can be delimited by such lateral wall 27 or also be made through the latter.

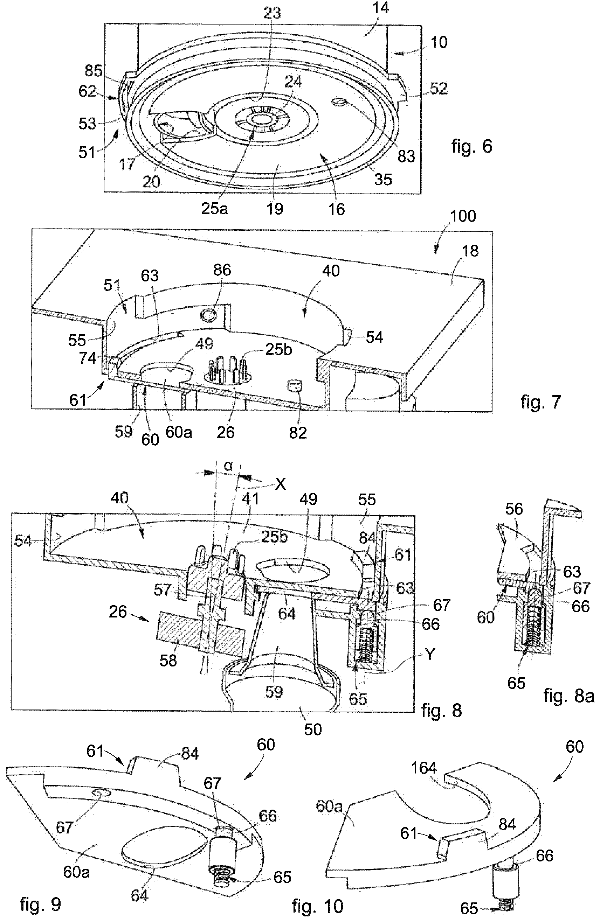

The bottom 16 can be provided with clamping members, for example a hole 83 (fig. 6), suitable to engage with respective second clamping members, for example a small peg 82, present in a compartment 40 of the apparatus 100 (fig. 7) in order to clamp the bottom 16 and allow a rotation of the container 14 with respect thereto in order to open the outlet aperture 17, as will be better described below.

With reference to figs. 2 to 3c, the feed means 13 comprise, or consist of, a feed member 30 disposed rotatable with respect to the axis of rotation X, X' of the pin 24 and able to be connected to it.

The feed member 30 also comprises, preferably, a single blade 34, 134, 234 made for example of plastic material, which extends at least partly in a radial direction with respect to the axis of rotation X, X', configured to selectively move the beans toward the outlet aperture 17.

According to possible variant embodiments, not shown, the feed member 30 may comprise two or more blades, for example three or four.

According to a first embodiment, described with reference to figs. 2, 2b, 3 and 3a, the feed member 30 comprises a central hub 34a from which the blade 34, 234 extends.

The central hub 34a has a tubular shape, and is internally provided with a cavity 33 suitable to house the pin 24.

According to the embodiments of figs. 2, 2b and 3a, the blade 34 has a helical conformation and develops around the central hub 34a substantially for the entire length of the latter.

The helical conformation allows to create a movement that lifts the beans during the rotation, so as to facilitate their exit.

The feed member 30 can also comprise an oblong body 30a, which comprises a first end 31, lower during use, and a second end 32, upper during use.

The first end 31 comprises the cavity 33 configured to house the pin 24 in such a way as to define a reciprocal coupling and to draw the feed member 30 into rotation. The two elements, namely the pin 24 and the oblong body 30a, can be connected to each other by means of a screw 48.

The second end 32 can cooperate with a support seating 46 integral with the container 14, for example made in a protection element 45, so as to keep the feed member 30 correctly aligned with respect to the axis of rotation X, X'.

According to other embodiments, the pin 24 and the feed member 30, or the oblong body 30a, are made in a single piece.

According to another embodiment, described with reference to figs. 2a and 3b-3c, the feed member 30 comprises a blade 134 having a helical shape and substantially without a central hub.

According to this embodiment, the blade 134 itself comprises a first lower end 131, which can be associated with a pin 24 or connected, for example by means of a screw 48, to the connection members 25a, and a second upper end 132 configured to couple to the support seating 46.

According to another embodiment, described with reference to fig. 3, the blade 234 can extend in a substantially radial direction, possibly inclined with respect to a vertical plane.

The blade 34, 134, 234 can comprise at least one flexible portion made of rubber, silicone, or other elastic or flexible material. Preferably, the flexible portion is provided on the end portion facing, during use, toward the internal surfaces of a chamber 39 inside which the feed member 30 is disposed during use.

According to some embodiments, for example visible in fig. 3c, it can be provided that the blade 134 comprises a first portion 135 made of rigid material and having a bearing function, and a second flexible portion 136 disposed externally with respect to the first portion 135, to facilitate the movement of the beans.

The hopper 10 also comprises a plate 35, which can be associated with the lower aperture 15 and the bottom 16, which comprises a bottom wall 37, provided with the outlet aperture 17, and a substantially cylindrical lateral wall 38 which extends from one side of the bottom wall 37, distanced from the perimeter edge, which defines the chamber 39 (figs. 2, 2a, 2b and 3).

The outlet aperture 17 of the plate 35 is preferably disposed misaligned with respect to the axis of rotation X, X' and to a central hole 42, and it extends at least partly outside the lateral wall 38, on which there can be provided a protruding portion 43 in correspondence with the outlet aperture 17 to facilitate the passage of the beans.

The beans are therefore actively thrust by the feed member 30 by centrifugal acceleration toward the exit aperture 17, from which they then fall by gravity.

According to some embodiments, described with reference to figs. 2, 2a and 2b, at the base of the outlet aperture 17 there is preferably disposed a step 36 protruding with respect to the bottom wall 37, which has the function of preventing unwanted escapes of the beans.

In proximity to the step 36, it can also be provided that the bottom wall 37 comprises a hollowed portion 37a to promote the stoppage of the beans.

This solution is particularly advantageous in combination with a feed member 30 that has a blade 34, 134 with a helical shape, because a movement that lifts the beans is created during the rotation, which can therefore easily overcome the step 36, while when the feed member 30 stops, the beans are also promptly stopped.

Advantageously, the bottom wall 37 provided with the step 36 and possibly the hollowed portion 37a can be provided either in combination with a feed member 30 rotatable about an inclined axis X or in combination with a feed member 30 rotatable about a substantially vertical axis X'.

The bottom wall 37 in one or the other case may be substantially horizontal or possibly slightly inclines downward in the direction of the outlet aperture 17.

Figs. 4 and 5 show two possible embodiments of an apparatus 100 for grinding beans comprising the grinding device 12 and the drive means 26 which can be selectively driven to make the feed means 13 rotate.

The apparatus 100 is equipped with a fixed support structure 18 configured to support its various components. In the case of an apparatus 100 of the autonomous type, the support structure 18 can be a portion of a bearing structure or of a cover of the apparatus 100. In the case of an apparatus 100 integrated in a machine 200, the support structure 18 could be connected to, or defined by, a support structure 201 of the machine 200, shaped in such a way as to have, internally, a compartment 202 in which the different components of the machine 200 are housed.

According to some embodiments, the apparatus 100 comprises detection mean 68 configured to detect a quantity of coffee beans fed by the feed means 13.

According to some embodiments, the detection means 68 can be of a volumetric type, weight-based, or be configured to determine the amount of beans fed based on a number of revolutions made by the feeding means 13.

According to some embodiments, for example illustrated with reference to fig. 2b, and combinable with the other embodiments in figs. 2-2a and 3-3c, the apparatus 100 comprises one or more position sensors 69 comprising a first component 88 arranged on the blade 34, 134, 234 and a second component 89 arranged in the compartment 40 for housing the hopper 10. The second component 89 is configured to detect a signal from the first component 88 at least when the first component 88 transits in a certain position, for example aligned along a detection axis Z relative to the position of the second component 89, and transmit a signal to a control unit 75 which on the basis of the received signal can determine a position of the feed means 13 and/or count a number of revolutions made by the latter.

In this case, the detection means 68 may include the one or more position sensors 69.

According to other embodiments, for example described with reference to figs. 1, 4 and 5 and combinable with the various embodiments of feed means of figs 2 to 3. the apparatus 100 comprises weighing means 70 associated with at least one of either the hopper 10 or the grinding device 12 and configured to weigh a quantity of beans fed by the feed means 13. In this case, the detection means 68 may include the weighing means 70.

According to further variants, not shown, the detection means 68 could include a measuring chamber suitable for containing a certain amount of beans. In this case, there could be sensors suitable for detecting the filling of the chamber or sensors for detecting the torque or speed of the feed means 13, configured to communicate with the control unit 75 to determine when the measuring chamber is full.

According to further embodiments, it may also be provided that the apparatus 100 include a combination of detection means 68 of one or the other type, so as to have redundant measurements and increase the accuracy of measurement and thus of the dose of coffee beans.

According to some embodiments, the grinding device 12 comprises a grinding chamber 21 into which the beans are conveyed and a pair of grinders 22 which can be selectively distanced in order to vary the granulometry of the powder substance. The grinders 22 can be of the truncated cone type, as for example shown, or also of the flat type.

According to some embodiments, the weighing means 70 comprise one or more load cells 71 associated, for example attached, to the support structure 18. According to possible embodiments, the weighing means 70 could comprise one or more dynamometers.

The apparatus 10 can comprise one or more mechanical support means 73 configured to connect the weighing means 70 to the support structure 18. The mechanical support means 73 can comprise a mobile plate 18a to which the weighing means 70 are attached, by means of brackets or support elements 72. The mechanical support means 73 allow to separate the load cells 71 with respect to a fixed portion 18b of the support structure 18.

According to possible variants, the mechanical support means 73 can comprise, or consist of, one or more elastic elements 74, having a first end 74a associated with a fixed portion 18b of the support structure 18 and a second end 74b associated with the mobile plate 18a, in turn connected to the weighing means 70 by means of support elements 72.

By "elastic elements" we mean elements which, due to their conformation or material, have elastic properties, that is, they are able to deform, to different extents, under the action of external forces and to recover, in whole or in part, their shape when such forces cease to act.

Fig. 4 shows a first embodiment in which the weighing means 70 are associated with the grinding device 12 and weigh the beans accumulated in the chamber 21 and in the collection chamber 50.

According to some embodiments, the load cells 71 connect the grinding device 12, and in particular the chamber 21, to a support structure 18 of the apparatus 100. In other words, the weighing means 70, that is the load cells 71 support the chamber 21 and are configured to weigh the grinding device 12, its content and every component thereof, in particular the chamber 21, the grinders 22, a drive member 64 associated with the grinders, and, where present, the collection chamber 50.

In particular, the grinding device 12 can be connected to the support structure 18 exclusively by means of the weighing means 70, that is, it is located substantially floating with respect to the other components of the apparatus 100 and in particular it is separate and disconnected from the hopper 10 and/or from the compartment 40 (see fig. 4).

In the example case, the grinding device 12 is connected to the load cells 71 which, in turn, are connected to the mobile plate 18a by means of the support elements 72.

In turn, the mobile plate 18a is connected to the fixed portion 18b by means of the elastic elements 74.

Thanks to the presence of the elastic elements 74, if excessive force is applied to the grinding device 12, the mechanical support means 73 flex and the grinding device 12 goes into an end-of-travel position without excessively stressing the load cells 71. This will be further described below.

The elastic elements 74 could comprise, for example, one or more springs, and be configured to dampen vibrations, or any other disturbances, during the weighing of the beans present inside the grinding device 12, so that the weighing is more accurate, as will be explained in detail later in the description.

Furthermore, the mechanical support means 73 have the function of making the grinding device 12 "floating" with respect to the support structure 18, that is, with respect to the fixed portion 18b. This advantageously allows to greatly reduce the vibrations and noise produced by the apparatus 100 during its use.

Between the fixed portion 18b, or components integral therewith, and the grinding device 12, or components integral therewith, there are provided end-of-travel members 41, 44, configured to reciprocally cooperate and limit the displacement of the grinding device 12 with respect to the fixed portion 18b.

In the example case, the end-of-travel members 41, 44 are respectively integral with the fixed structure 18b and with a motor member 64 associated with the grinding device 12 and configured to rotate the grinders 22.

According to some embodiments, a seating 41 can be provided on the fixed portion 18b and the motor member 64 can comprise a protuberance 44 which protrudes radially and is mobile with a certain clearance in several directions inside the seating 41. In this case, the seating 41 and the protuberance 44 act as end-of-travel members.

When forces greater than the contrast forces provided by the mechanical support means 73 are exerted on the grinding device 12, the latter moves until the protuberance 44 comes into contact with a wall of the seating 41, thus limiting the travel of the grinding device 12, with the aim of preventing accidental overloads acting on the weighing devices 70.

Fig. 5 shows a second embodiment in which the weighing means 70 are associated with the hopper 10 and weigh, by difference, the beans released by the latter.

In the example case, the hopper 10 is housed, during use, in a housing compartment 40.

According to embodiments, the housing compartment 40 is supported exclusively by the load cells 71 which in turn are connected to the support structure 18.

In the example case of fig. 5, the housing compartment 40 is separate and disposed floating from the support structure 18 and rests on the mechanical support means 73, which absorb and compensate for any movements of the hopper 10 and of the housing compartment 40 with respect to the support structure 18.

Thanks to the elastic elements 74, if excessive force is applied on the hopper 10 or in the housing compartment 40, the mechanical support means 73 flex and the housing compartment 40 goes into an end-of-travel position without excessively stressing the load cells 71.

Between the housing compartment 40, or elements integral therewith, and the fixed portion 18b, or elements integral therewith, there are provided end-of-travel members 141, 144 configured to reciprocally cooperate and limit the displacement of the housing compartment 40 and therefore of the hopper 10 with respect to the fixed portion 18b.

According to some embodiments, the compartment 40 comprises a seating 141 and the fixed portion 18b comprises an end portion 144, for example a shaped edge, which is mobile with a certain clearance in several directions inside the seating 141. When forces greater than the contrast forces provided by the mechanical support means 73 are exerted on the hopper 10 or on the housing compartment 40, the compartment 40 moves with respect to the fixed portion 18b as long as the end portion 144 goes into contact with a wall of the seating 141, thus limiting the travel of the compartment 40, with the aim of preventing accidental overloads acting on the weighing means 70.

The apparatus 100 also comprises a control unit 75 configured to regulate its functioning, which is connected to the detection means 68, in particular the position sensors 69 and/or the weighing means 70, or the sensors provided in combination with a metering chamber, and is configured to receive at input the measurement detected by the latter, and to command the selective and coordinated functioning of the various components, for example, of the feed means 13 and of the grinding device 12.

According to some embodiments, the control unit 75 is configured to command the feed means 13 as a function of the data received by the position sensors 69 in such a way that the feed member 30 makes a suitable number of revolutions for feeding the desired amount of beans.

According to other embodiments, the control unit 75 can be configured to command the feed means 13 as a function of the data received from the weighing means 70 in order to feed, on each occasion, only the required quantity of beans into the grinding chamber 21.

For example, a set of values relating to the quantity of powder substance necessary for the preparation of one or more beverages could be stored in a storage unit 76 associated with the control unit 75, and the latter could command the selective functioning of the feed means 13 until the quantity of beans fed by the latter does not correspond to one of these values, for example:

| Beverage type | Grams required |
|---|---|
| Extra light coffee | 4g |
| Light coffee | 6g |
| Normal coffee | 8g |
| Strong coffee | 10g |
| Extra strong coffee | 12g |

Data can also be stored in the storage unit 76 relating to the quantity of coffee beans fed for each revolution made by the feed member 30, for example in terms of grams/revolution or volume/revolution, or a number of revolutions needed in relation of a type of beverage selected.

According to other variants, the apparatus 10 comprises a user interface 79 through which to directly enter a command relating to a quantity by weight, or a dose of powder substance required.

According to the embodiments of figs. 2, 3 and 5, the container 14 comprises an upper aperture 44 closed substantially hermetically by means of a lid 47.

With the container 14 of the hopper 10 there can be associated a protection element 45, or protection wall, also called "finger guard", which comprises, in correspondence with one of its surfaces, lower during use, the seating 46 to house the second end 32, 132 of the feed member 30. The seating 46 can comprise, for example, rolling members, such as one or more bearings, to facilitate the rotation of the feed member 30 inside it.

According to some embodiments, shown in figs. 6-7, the hopper 10 and the compartment 40 are provided with respective coupling and clamping members 51 configured to cooperate with each other in such a way as to allow a reciprocal coupling in the vertical direction, preventing at the same time a reciprocal rotation.

The clamping members 51 preferably comprise two fins 52, 53, each suitable to be inserted in its own cavity or groove 54, 55, which are disposed angularly offset from each other and can advantageously have different sizes from each other to allow a univocal positioning of the hopper 11.

Inside at least one cavity 54, 55 there can be disposed a microswitch 86 or other device suitable to detect the presence of the fins 52, 53. Once the fins 52, 53 have been inserted into the respective cavities 54, 55, the container 14 can be rotated so as to clamp it with respect to the support structure 18, for example by an angle of about 40°-50°.

The rotation of the container 14 involves the alignment between the outlet aperture 17 and the passage aperture 20 on the bottom 16, allowing the beans to transit through them.

According to some embodiments, the compartment 40 can comprise a bottom wall 41 in which there is provided an inlet 49 for the beans which faces the grinding device 12.

Below the inlet 49, in particular in the case in which the weighing means 70 are associated with the grinding device 12, there can be disposed a bean collection chamber 50, which is connected to the grinding chamber 21 and has the function of both conveying the beans toward the grinding device 12 and also allowing the beans to accumulate therein. The volume of the collection chamber 50 is in particular designed in such a way as to contain a quantity of beans by volume corresponding to the maximum quantity of beans by weight that can be selected, possibly taking into account, for safety, a certain margin of error, for example of 10%.

The collection chamber 50 is advantageously integral with the grinding device 12 and is separate with respect to the inlet 49. Between the inlet 49 and the collection chamber 50 there can possibly be a transit channel 59, which is separated from the collection chamber 50 and preferably integral with the housing compartment 40.

According to some embodiments, the housing compartment 40 can comprise a cover door 60 suitable to selectively close the channel 59 when no hopper 10 is inserted.

The door 60 can comprise first engagement members 61 suitable to engage with corresponding second engagement members 62 present on the container 14, in such a way that a rotation of the latter in the compartment 40 entails a contextual movement of the door 60 in order to open or close the inlet 49 to the channel 59.

The first engagement members 61 can comprise a protruding portion 84 (figs. 8-10) suitable to slide in a guide slot 63 made through in the bottom wall 41, and the second engagement members 62 can comprise a seating 85 suitable to receive the protruding portion 74, for example made in at least one fin 53 (fig. 6).

The selective opening and closing of the channel 59 occurs by means of manual rotation of the container 14 in one sense or the other. When the container 14 is rotated in the opening condition, the door 60 rotates until a through hole 64 or recess 164 made in it aligns with the inlet 49 (figs. 7-8), while when the container 14 is rotated in the closing condition, a solid portion 60a of the door 60 is positioned below the inlet 49.

According to some embodiments, elastic interference means can be associated with the door 60, which are configured to keep the door 60 in the closed or open position, preventing an accidental movement thereof. The interference means can comprise elastic elements 65, for example a spring, associated with a pin 66 which interacts with respective niches 67 present in the door 60 and causes an interference to the sliding in correspondence with the opening and closing positions. The interference means 65, 66 cooperate axially with the niches 67 in a direction Y.

When the elastic means 65 thrust the pin 66 inside a niche 67, the protruding portion 84 in turn is kept thrust against the seating 85 of the fin 53 present on the container 11, thus contributing to also keep the hopper 10 stationary in a stable position.

With reference to fig. 1, a machine 200 according to the present invention can comprise, in addition to the components described above, an infusion unit 77 configured to prepare a determinate beverage, a hydraulic circuit, not shown in the drawings, for feeding water to the infusion unit 77, and a delivery apparatus hydraulically connected to the infusion unit 77, which allows to deliver the determinate beverage into a container 81.

The machine 200 can comprise a user interface 79 provided with a display device 80, for example a touch-sensitive screen, by means of which a user can select a determinate beverage, set one or more characteristics thereof, or select other options or operating modes.

The functioning of the grinding apparatus 100 described heretofore, which corresponds to the grinding method for preparing a dose of powder substance according to the invention, comprises the following steps.

A first step in which a quantity of beans is supplied inside the hopper 10 such as to at least partly fill the container 14.

A subsequent step, in which a user provides and/or selects a command for the preparation of a dose of powder substance, in the case of an autonomous apparatus 100, or for the preparation of a beverage in the case of a machine 200.

In the latter case, the user can also set one or more characteristics of the latter, or he/she can select other options or operating modes thereof. This step can be carried out, for example, by using the display device 80. It should be noted that the quantity of beans necessary to prepare the beverage selected by the user can be stored in the storage unit 76, or it can possibly be modified by the user.

The method also comprises a subsequent step in which the feed means 13 are driven to selectively feed the beans toward the grinding device 12.

The feed member 30 is made to selectively rotate around the axis of rotation X, X', in such a way that its blade 34, 134, 234 thrusts the beans located in the chamber 39 toward the outlet aperture 17, the passage aperture 20 and subsequently the collection chamber 50.

According to some embodiments, the control unit 75 before driving the feed means 13 detects the position of the feed means 13, in particular of the feed member 30, by means of at least one position sensor 69 and subsequently commands the feed means 13 in such a way that the feed member 30 makes a suitable number of revolutions for feeding the desired quantity of beans.

According to some embodiments, while the feed means 13 are in operation, the weighing means 70 weigh, substantially continuously, the instantaneous value of the quantity of beans present in the grinding device 12 or released by the hopper 10, and send a signal to the control unit 75 which compares this measured value with the value set for the selected beverage.

When the measured value corresponds to the preset value, the feed means 13 are stopped by the control unit 75 and the feed of the beans to the grinding device 12 is interrupted.

In the event that the weighing means 70 are connected to the grinding device 12, the latter is activated when the detected weight corresponds to the desired quantity of beans.

In the event that the weighing means 70 are connected to the hopper 10, the grinding device 12 can also be driven while the feed means 13 are in operation, since the quantity of beans released is weighed upstream of the grinding device 12 itself.

The feed of the beans could comprise a first initial sub-step in which the feed means 13 are activated and made to rotate at a first speed, for example close to the maximum speed, or a predefined nominal speed, and a second sub-step in which the feed means 13 are slowed down and made to rotate with a second lower speed, in such a way as to allow a more gradual and precise dosing of the beans to the grinding device 12.

For example, the passage from the first speed to the second speed can be carried out when the weighing means 70 detect a weight corresponding to a percentage comprised between 70% and 90% of the total weight of the required quantity, preferably about 75-85%.

The method for preparing a dose of powder substance comprises a control step to verify whether there is a residual quantity of beans in the grinding device 12 or whether all the quantity of beans fed has been completely ground, before turning the grinding device 12 off.

According to some embodiments, in the case of weighing means 70 associated with the grinding device 12, the control step provides to stop the grinders 22, after a certain time interval correlated to the quantity of beans to be ground, weigh the grinding device 12 to determine, if present, the weight of any residual quantity of beans, calculate an additional grinding time to grind the residual quantity and activate the grinding device 12 again.

According to possible variants, the step of control by means of weighing provides to continue to weigh the grinding device 12 substantially continuously while it is in operation, and to stop it when an instantaneous value detected by the weighing means 70 corresponds to zero or to a tare reference value correlated to the weight of the grinding device 12 when it is empty.

Alternatively, or in addition, the control unit 75 could detect the current intensity absorbed by the grinding device 12 and compare it with a predeterminate or expected current value.

Alternatively, or in addition, the control unit 75 could compare the difference in speed of the rotation of the motor member 64 or of the grinders 22, for example detected by means of special sensors, not shown, compared to normal operating values at steady state.

In the case of an autonomous apparatus 100, the powder can be fed to a filter holder, while in the case of a machine 200 of the automatic and/or manual type, it can be fed directly to the infusion unit 77, for example by means of a fall by gravity.

According to some embodiments, it can be provided that the control unit 75 verifies that the quantity of the powder fed to the infusion unit 77 corresponds to the preset value relating to the beverage selected by the user, before the powder is subjected to infusion and the beverage is delivered.

This verification can be carried out, for example, by weighing the residual quantity of beans present inside the grinding device 12 when the powder is fed to the infusion unit 77, or by detecting the volume of the quantity of coffee powder present in the infusion unit 77 after it has been subjected to compression, and comparing it with an expected volume value.

In the event that the quantity of coffee powder in the infusion unit 77 does not correspond to the quantity required, the control unit 75 can perform a feedback adjustment in order to adjust the rotation of the feed means 13 and the value of the reference weight to consider.

It is clear that modifications and/or additions of parts may be made to the hopper 10, to the grinding apparatus 100, to the machine 200 and to the method for preparing a dose of powder substance and a beverage as described heretofore, without departing from the scope of the present invention as defined by the claims. It is also clear that, although the present invention has been described with reference to some specific examples, a person of skill in the art shall certainly be able to achieve many other equivalent forms of grinding apparatuses and methods, machines and methods for preparing a beverage, having the characteristics as set forth in the claims and hence all coming within the field of protection defined thereby.

In the following claims, the sole purpose of the references in brackets is to facilitate reading and they must not be considered as restrictive factors with regard to the field of protection defined by claims.

## Claims

1. Hopper (10) for feeding beans, comprising a container (14) for the beans having an outlet aperture (17), a closing bottom (16) provided with a passage aperture (20) that in an opening condition aligns with said outlet aperture (17) and disposed rotatable with respect to said container (14) in order to selectively open and close said outlet aperture (17), and feed means (13) which can be selectively driven to feed said beans toward said outlet aperture (17), said feed means comprising a single blade (34, 134, 234), **characterized in that** said feed means (13) comprise a feed member (30) rotatable around an axis of rotation (X) inclined, with respect to a vertical axis, by an angle of inclination (α) comprised between 3° and 20°.

2. Hopper (10) as in claim 1, **characterized in that** said single blade (34, 134) has a helical development around said axis of rotation (X).

3. Hopper (10) as in claim 1 or 2, **characterized in that** said feed member (30) comprises a central hub (34a) to which said single blade (34, 234) is connected.

4. Hopper (10) as in claim 1 or 2 **characterized in that** said single blade (134) is self-bearing and comprises a first end (131) suitable to cooperate with a pin (24) disposed through in said bottom (13) and a second end (132) suitable to cooperate with a support seating (46) integral with said container (14).

5. Hopper (10) as in any claim hereinbefore, **characterized in that** said axis of rotation (X) is inclined in the direction of said outlet aperture (17) or in a direction offset by an angle (β) comprised between 10° and 50° upstream of the position of said outlet aperture (17).

6. Hopper (10) as in any claim hereinbefore, **characterized in that** it comprises a plate (35) having a bottom wall (37) provided with said outlet aperture (17) misaligned with respect to said axis of rotation (X), wherein around said outlet aperture (17) there is disposed a protruding step (36) and said bottom wall (37) comprises a hollowed portion (37a) in proximity to said step (36).

7. Grinding apparatus (100) equipped with at least one hopper (10) as in any claim hereinbefore and a grinding device (12), **characterized in that** it comprises drive means (26) which can be selectively driven to make said feed means (13) rotate, detection means (68) configured to detect a quantity of beans fed by said feed means (13), and a control and command unit (75) configured to command at least said drive means (26) and said grinding device (12) as a function of the data detected by said detection means (68).

8. Grinding apparatus (100) as in claim 7, **characterized in that** said detection means (68) comprise one or more of weighing means (70) associated with at least one of either said hopper (10) or said grinding device (12) and position sensors (69) associated to said feed means (13).

9. Grinding apparatus (100) as in claim 8, **characterized in that** said weighing means (70) are connected to a fixed portion (18b) of a support structure (18) of said grinding apparatus (100) by means of mechanical support means (73) comprising at least one support element (72) or one elastic element (74).

10. Grinding apparatus (100) as in claim 9, **characterized in that** said weighing means (70) and/or said at least one elastic element (74) is/are attached to at least one mobile plate (18a) of said support structure (18), with which said grinding device (12) or said housing compartment (40) is associated, **and in that** between said grinding device (12) or said housing compartment (40) and said fixed portion (18b), or between respective components integral therewith, end-of-travel members (41, 44) are provided configured to cooperate reciprocally and limit the displacement of said grinding device (12) or said housing compartment (40) with respect to said fixed portion (18b), with the aim of limiting accidental overloads acting on said weighing means (70).

11. Grinding apparatus (100) as in any claim from 7 to 10, **characterized in that** it comprises a housing compartment (40) for said hopper (10) comprising a cover door (60) suitable to selectively close a transit channel (59) for said beans toward said grinding device (12) when no hopper (10) is inserted, wherein said door (60) comprises first engagement members (61) suitable to engage with corresponding second engagement members (62) present on said container (14) in such a way that a rotation of the latter in one or the other sense involves a contextual movement of said door (60) between an open condition and a closed condition.

12. Machine (200) for preparing coffee beverages, **characterized in that** it comprises a grinding apparatus (100) as in any claim from 7 to 11, an infusion unit (77) and at least one user interface (79) provided with at least one display device (80) by means of which a user can select a determinate beverage, set one or more characteristics thereof, or select other options or operating modes.

13. Grinding method for preparing a dose of powder substance starting from a bean substance contained in a hopper (10) comprising a container (14) for the beans having an outlet aperture (17) and a closing bottom (16) rotatable with respect to said container (14) and provided with a passage aperture (20) that in an opening condition aligns with said outlet aperture (17), wherein said method comprises:
- receiving an indication regarding a desired value of a quantity of said beans to be ground;
- driving feed means (13) of said hopper (10) to selectively feed said quantity of beans through said outlet aperture (17) and said passage aperture (20) toward a grinding device (12), wherein said feed means (13) comprise a feed member (30) rotatable around an axis of rotation (X) inclined, with respect to a vertical axis, by an angle of inclination (α) comprised between 3° and 20° and comprising a single blade (34);
- detecting a value of the quantity of beans fed by said feed means (13) be means of detection means (68);
- stopping said feed means (13) when the quantity of beans fed corresponds to said desired value;
- activating said grinding device (12) to grind said quantity of beans into powder.

14. Grinding method as in claim 13, **characterized in that** it provides to position said hopper (10) in a housing compartment (40) and rotate said container (14) with respect to said bottom (16) in order to clamp said hopper (10) in said housing compartment (40) and open said outlet aperture (17), wherein the rotation of said container (14) involves a contextual movement of a cover door (60) covering said housing compartment (40) in order to selectively open and close a transit channel (59) for the beans toward said grinding device (12).

15. Grinding method as in claim 13 or 14, **characterized in that** it comprises a control step to verify whether there is a residual quantity of said beans in said grinding device (12), or whether the entire quantity of said beans fed has been completely ground before turning off said grinding device (12).

16. Grinding method as in any claim from 13 to 15, **characterized in that** said step of detecting a value of the quantity of beans fed by said feed means (13) comprises:
- weighing, substantially continuously, an instantaneous value of said quantity of beans fed by said feed means (13);
- comparing said instantaneous value measured with said desired value and, if they coincide, stopping said feed means (13).

17. Grinding method as in any claim from 13 to 16, **characterized in that** said step of detecting a value of the quantity of beans fed by said feed means (13) comprises:
- detecting the position of a feed member (30) of said feed means (13) by means of at least one position sensor (69) before driving said feed means (13);
- driving said feed means (13) in such a way that said feed member (30) makes a suitable number of revolutions for feeding said desired value of beans.

18. Method for preparing a beverage with a machine (200) as in claim 12, **characterized in that** it is able to:
- receive a command for the preparation of a selected beverage in a machine (200) for preparing beverages, determining a quantity of beans necessary and sufficient to prepare said selected beverage and execute:
- a step of preparing a dose of powder substance in which feed means (13), disposed inside a hopper (10) associated with said machine (200), are driven to selectively feed said quantity of beans toward a grinding device (12);
- a step, simultaneous to the previous one, in which detection means (68) detect a value of said quantity of said beans fed by said feed means (13), and send a signal relating to said detected value to a control unit (75) which compares it with preset values relating to said selected beverage stored in a storage device (76);
- a step in which, when said detected value corresponds to the preset value relating to said selected beverage, said feed means (13) are stopped and said grinding device (12) completely grinds said quantity of beans in order to obtain said powder substance to be fed to an infusion unit (77);
- a step in which said powder is subjected to infusion and said beverage is delivered.

## Patentansprüche

1. Trichter (10) zum Zuführen von Bohnen, umfassend einen Behälter (14) für die Bohnen, der eine Ausgabeöffnung (17) aufweist, einen Verschlussboden (16), der mit einer Durchgangsöffnung (20) versehen ist, die sich in einem Öffnungszustand mit der Ausgabeöffnung (17) ausrichtet und drehbar im Hinblick auf den Behälter (14) angeordnet ist, um die Ausgabeöffnung (17) selektiv zu öffnen und zu schließen, und Zuführmittel (13), die selektiv angetrieben werden können, um die Bohnen zur Ausgabeöffnung (17) hin zuzuführen, wobei die Zuführmittel eine Einzelschlaufe (34, 134, 234) umfassen,
**dadurch gekennzeichnet, dass** die Zuführmittel (13) ein Zuführelement (30) umfassen, das um eine Drehachse (X) drehbar ist, die, im Hinblick auf eine vertikale Achse, um einen Neigungswinkel (α) zwischen 3° und 20° geneigt ist.

2. Trichter (10) nach Anspruch 1, **dadurch gekennzeichnet, dass** die Einzelschlaufe (34, 134) einen spiralförmigen Verlauf um die Drehachse (X) hat.

3. Trichter (10) nach Anspruch 1 oder 2, **dadurch gekennzeichnet, dass** das Zuführelement (30) eine Zentralnabe (34a) hat, mit der die Einzelschlaufe (34, 234) verbunden ist.

4. Trichter (10) nach Anspruch 1 oder 2, **dadurch gekennzeichnet, dass** die Einzelschlaufe (134) selbsttragend ist und ein erstes Ende (131), das dazu geeignet ist, mit einem Stift (24) zusammenzuwirken, der im Boden (13) durchgehend angeordnet ist, und ein zweites Ende (132), das dazu geeignet ist, mit einem Stützsitz (46) zusammenzuwirken, der mit dem Behälter (14) einteilig ist, umfasst.

5. Trichter (10) nach einem der vorhergehenden Ansprüche, **dadurch gekennzeichnet, dass** die Drehachse (X) in der Richtung der Ausgabeöffnung (17) oder in einer Richtung, die um einen Winkel (ß) zwischen 10° und 50° stromaufwärts der Stellung der Ausgabeöffnung (17) versetzt ist, geneigt ist.

6. Trichter (10) nach einem der vorhergehenden Ansprüche, **dadurch gekennzeichnet, dass** er eine Platte (35) umfasst, die eine Bodenwand (37) hat, die mit der Ausgabeöffnung (17) versehen ist, die im Hinblick auf die Drehachse (X) nicht ausgerichtet ist, worin um die Ausgabeöffnung (17) herum eine vorstehende Stufe (36) angeordnet ist und die Bodenwand (37) einen ausgehöhlten Abschnitt (37a) in der Nähe der Stufe (36) umfasst.

7. Mahlapparat (100), der mit zumindest einem Trichter (10) nach einem der vorhergehenden Ansprüche und einer Mahlvorrichtung (12) versehen ist, **dadurch gekennzeichnet, dass** er Antriebsmittel (26), die selektiv angetrieben werden können, um die Zuführmittel (13) zum Drehen zu bringen, Detektionsmittel (68), die dafür ausgelegt sind, eine Menge von Bohnen zu detektieren, die von den Zuführmitteln (13) zugeführt werden, und eine Steuerungs- und Bedienungseinheit (75), die dafür ausgelegt ist, zumindest die Antriebsmittel (26) und die Mahlvorrichtung (12) in Abhängigkeit von den Daten zu steuern, die von den Detektionsmitteln (68) detektiert werden, umfasst.

8. Mahlapparat (100) nach Anspruch 7, **dadurch gekennzeichnet, dass** die Detektionsmittel (68) eines oder mehrere von Wiegemitteln (70), die zumindest einem bzw. einer von entweder dem Trichter (10) oder der Mahlvorrichtung (12) zugeordnet sind, und Positionssensoren (69), die den Zuführmitteln (13) zugeordnet sind, umfassen.

9. Mahlapparat (100) nach Anspruch 8, **dadurch gekennzeichnet, dass** die Wiegemittel (70) mit einem festen Abschnitt (18b) einer Stützstruktur (18) des Mahlapparates (100) mittels mechanischer Stützmittel (73) versehen sind, die zumindest ein Stützelement (72) oder ein elastisches Element (74) umfassen.

10. Mahlapparat (100) nach Anspruch 9, **dadurch gekennzeichnet, dass** die Wiegemittel (70) und/oder das zumindest eine elastische Element (74) an zumindest einer beweglichen Platte (18a) der Stützstruktur (18) befestigt ist/sind, der die Mahlvorrichtung (12) oder der Aufnahmeraum (40) zugeordnet ist, **und dass** zwischen der Mahlvorrichtung (12) oder dem Aufnahmeraum (40) und dem festen Abschnitt (18b), oder zwischen jeweiligen Bestandteilen, die einteilig damit sind, Anschlagmittel (41, 44) vorgesehen sind, die dafür ausgelegt sind, wechselseitig zusammenzuwirken und die Versetzung der Mahlvorrichtung (12) oder des Aufnahmeraums (40) im Hinblick auf den festen Abschnitt (18b) zu begrenzen, mit der Absicht, unbeabsichtigte Überlasten, die auf die Wiegemittel (70) wirken, zu begrenzen.

11. Mahlapparat (100) nach einem der Ansprüche 7 bis 10, **dadurch gekennzeichnet, dass** er einen Aufnahmeraum (40) für den Trichter (10) umfasst, der eine Abdecktür (60) umfasst, die dazu geeignet ist, einen Durchgangskanal (59) für die Bohnen zur Mahlvorrichtung (12) hin selektiv zu schließen, wenn kein Trichter (10) eingefügt ist, worin die Tür (60) erste Eingriffselemente (61) umfasst, die dazu geeignet sind, mit entsprechenden zweiten Eingriffselementen (62) einzugreifen, die an dem Behälter (14) derart vorhanden sind, dass eine Drehung des letztgenannten in die eine oder in die andere Richtung eine gleichzeitige Bewegung der Tür (60) zwischen einem offenen Zustand und einem geschlossenen Zustand mit sich bringt.

12. Maschine (200) zur Zubereitung von Kaffeegetränken, **dadurch gekennzeichnet, dass** sie einen Mahlapparat (100) nach einem der Ansprüche 7 bis 11, eine Brüheinheit (77) und zumindest eine Benutzerschnittstelle (79) umfasst, die mit zumindest einer Anzeigevorrichtung (80) versehen ist, mittels welcher ein Benutzer ein bestimmtes Getränk auswählen, ein oder mehrere Merkmale davon einstellen oder andere Optionen oder Betriebsarten auswählen kann.

13. Mahlverfahren zur Zubereitung einer Dosis von Pulversubstanz ausgehend aus einer Bohnensubstanz, die in einem Trichter (10) enthalten ist, der einen Behälter (14) für die Bohnen umfasst, der eine Ausgabeöffnung (17) und einen Verschlussboden (16) aufweist, der im Hinblick auf den Behälter (14) drehbar ist und mit einer Durchgangsöffnung (20) versehen ist, die sich in einem Öffnungszustand mit der Ausgabeöffnung (17) ausrichtet, worin das Verfahren umfasst:
- Empfangen einer Angabe über einen gewünschten Wert einer Menge von den Bohnen, die gemahlen werden sollen;
- Antreiben von Zuführmitteln (13) des Trichters (10), um die Menge von Bohnen durch die Ausgabeöffnung (17) und die Durchgangsöffnung (20) zu einer Mahlvorrichtung (12) hin selektiv zuzuführen, worin die Zuführmittel (13) ein Zuführelement (30) umfassen, das um eine Drehachse (X) drehbar ist, die, im Hinblick auf eine vertikale Achse, um einen Neigungswinkel (α) zwischen 3° und 20° geneigt ist, und eine Einzelschlaufe (34) umfassen;
- Detektieren eines Wertes der Menge von Bohnen, die von den Zuführmitteln (13) zugeführt werden, mittels Detektionsmittel (68);
- Stoppen der Zuführmittel (13), wenn die Menge von Bohnen, die zugeführt werden, dem gewünschten Wert entspricht;
- Aktivieren der Mahlvorrichtung (12), um die Menge von Bohnen zu Pulver zu mahlen.

14. Mahlverfahren nach Anspruch 13, **dadurch gekennzeichnet, dass** es vorsieht, den Trichter (10) in einen Aufnahmeraum (40) zu positionieren und den Behälter (14) im Hinblick auf den Boden (16) zu drehen, um den Trichter (10) im Aufnahmeraum (40) zu klemmen und die Ausgabeöffnung (17) zu öffnen, worin die Drehung des Behälters (14) eine gleichzeitige Bewegung einer Abdecktür (60) mit sich bringt, die den Aufnahmeraum (40) abdeckt, um einen Durchgangskanal (59) für die Bohnen zur Mahlvorrichtung (12) hin selektiv zu öffnen und zu schließen.

15. Mahlverfahren nach Anspruch 13 oder 14, **dadurch gekennzeichnet, dass** es einen Steuerungsschritt umfasst, um zu überprüfen, ob es eine Restmenge von den Bohnen in der Mahlvorrichtung (12) gibt, oder ob die ganze Menge der zugeführten Bohnen völlig gemahlen wurde, bevor die Mahlvorrichtung (12) ausgeschaltet wird.

16. Mahlverfahren nach einem der Ansprüche 13 bis 15, **dadurch gekennzeichnet, dass** der Schritt des Detektierens eines Wertes der Menge von Bohnen, die von den Zuführmitteln (13) zugeführt werden, umfasst:
- Wiegen, im Wesentlichen kontinuierlich, eines augenblicklichen Wertes der Menge von Bohnen, die von den Zuführmitteln (13) zugeführt werden;
- Vergleichen des gemessenen augenblicklichen Wertes mit dem gewünschten Wert und, wenn sie übereinstimmen, Stoppen der Zuführmittel (13).

17. Mahlverfahren nach einem der Ansprüche 13 bis 16, **dadurch gekennzeichnet, dass** der Schritt des Detektierens eines Wertes der Menge von Bohnen, die von den Zuführmitteln (13) zugeführt werden, umfasst:
- Detektieren der Position eines Zuführelementes (30) der Zuführmittel (13) mittels zumindest eines Positionssensors (69) vor dem Antreiben der Zuführmittel (13);
- Antreiben der Zuführmittel (13) in einer Weise, dass das Zuführelement (30) eine geeignete Zahl von Umdrehungen durchführt, um den gewünschten Wert von Bohnen zuzuführen.

18. Verfahren zum Zubereiten eines Getränkes mit einer Maschine (200) nach Anspruch 12, **dadurch gekennzeichnet, dass** es Folgendes tun kann:
- einen Befehl für die Zubereitung eines ausgewählten Getränkes in einer Maschine (200) zur Zubereitung von Getränken zu empfangen, eine Menge von Bohnen zu bestimmen, die notwendig und ausreichend sind, um das ausgewählte Getränk zuzubereiten und Folgendes durchzuführen:
- einen Schritt des Zubereitens einer Dosis von Pulversubstanz, in dem Zuführmittel (13), die innerhalb eines Trichters (10) angeordnet sind, der der genannten Maschine (200) zugeordnet ist, angetrieben werden, um die Menge von Bohnen zu einer Mahlvorrichtung (12) hin selektiv zuzuführen;
- einen Schritt, der mit dem vorhergehenden gleichzeitig ist, in dem Detektionsmittel (68) einen Wert der Menge von Bohnen detektieren, die von den Zuführmitteln (13) zugeführt werden, und ein Signal, das sich auf den detektierten Wert bezieht, an eine Steuerungseinheit (75) senden, die es mit voreingestellten Werten vergleicht, die sich auf das ausgewählte Getränk beziehen, die in einer Speicherungsvorrichtung (76) gespeichert sind;
- einen Schritt, in dem, wenn der detektierte Wert dem voreingestellten Wert entspricht, der sich auf das ausgewählte Getränk bezieht, die Zuführmittel (13) gestoppt werden und die Mahlvorrichtung (12) die Menge von Bohnen vollständig mahlt, um die Pulversubstanz zu erhalten, die einer Brüheinheit (77) zugeführt werden soll;
- einen Schritt, in dem das Pulver dem Brühen unterzogen wird und das Getränk abgegeben wird.

## Revendications

1. Trémie (10) pour l'alimentation en grains, comprenant un récipient (14) pour les grains comprenant une ouverture de sortie (17), un fond (16) de fermeture muni d'une ouverture de passage (20) qui, dans un état d'ouverture, s'aligne avec ladite ouverture de sortie (17) et est disposé de manière rotative par rapport audit récipient (14) afin d'ouvrir et de fermer de manière sélective ladite ouverture de sortie (17), et des moyens d'alimentation (13) qui peuvent être entraînés de manière sélective pour acheminer lesdits grains vers ladite ouverture de sortie (17), lesdits moyens d'alimentation comprenant une lame unique (34, 134, 234), **caractérisée en ce que** lesdits moyens d'alimentation (13) comprennent un élément d'alimentation (30) pouvant tourner autour d'un axe de rotation (X) incliné, par rapport à un axe vertical, d'un angle d'inclinaison (α) compris entre 3° et 20°.

2. Trémie (10) selon la revendication 1, **caractérisée en ce que** ladite lame unique (34, 134) présente un développement hélicoïdal autour dudit axe de rotation (X).

3. Trémie (10) selon la revendication 1 ou 2, **caractérisée en ce que** ledit élément d'alimentation (30) comprend un moyeu central (34a) auquel ladite lame unique (34, 234) est reliée.

4. Trémie (10) selon la revendication 1 ou 2, **caractérisée en ce que** ladite lame unique (134) est autoportante et comprend une première extrémité (131) appropriée pour coopérer avec une broche (24) disposée à travers ledit fond (13) et une seconde extrémité (132) appropriée pour coopérer avec un siège de support (46) solidaire dudit récipient (14).

5. Trémie (10) selon l'une quelconque des revendications précédentes, **caractérisée en ce que** ledit axe de rotation (X) est incliné en direction de ladite ouverture de sortie (17) ou dans une direction décalée d'un angle (β) compris entre 10° et 50° en amont de la position de ladite ouverture de sortie (17).

6. Trémie (10) selon l'une quelconque des revendications précédentes, **caractérisée en ce qu'**elle comprend une plaque (35) comportant une paroi inférieure (37) munie de ladite ouverture de sortie (17) désalignée par rapport audit axe de rotation (X), dans laquelle autour de ladite ouverture de sortie (17) est disposé un cran (36) en saillie et ladite paroi inférieure (37) comprend une partie creuse (37a) à proximité dudit cran (36).

7. Appareil de broyage (100) équipé d'au moins une trémie (10) selon l'une quelconque des revendications précédentes et d'un dispositif de broyage (12), **caractérisé en ce qu'**il comprend des moyens d'entraînement (26) qui peuvent être entraînés sélectivement pour faire tourner lesdits moyens d'alimentation (13), des moyens de détection (68) configurés pour détecter une quantité de grains acheminés par lesdits moyens d'alimentation (13), et une unité de contrôle et de commande (75) configurée pour commander au moins lesdits moyens d'entraînement (26) et ledit dispositif de broyage (12) en fonction des données détectées par lesdits moyens de détection (68).

8. Appareil de broyage (100) selon la revendication 7, **caractérisé en ce que** lesdits moyens de détection (68) comprennent un ou plusieurs parmi des moyens de pesage (70) associés à au moins l'un parmi ladite trémie (10) ou ledit dispositif de broyage (12) et des capteurs de position (69) associés auxdits moyens d'alimentation (13).

9. Appareil de broyage (100) selon la revendication 8, **caractérisé en ce que** lesdits moyens de pesage (70) sont reliés à une partie fixe (18b) d'une structure de support (18) dudit appareil de broyage (100) au moyen de moyens de support mécaniques (73) comprenant au moins un élément de support (72) ou un élément élastique (74).

10. Appareil de broyage (100) selon la revendication 9, **caractérisé en ce que** lesdits moyens de pesage (70) et/ou ledit au moins un élément élastique (74) est/sont attaché(s) à au moins une plaque mobile (18a) de ladite structure de support (18), à laquelle ledit dispositif de broyage (12) ou ledit compartiment de logement (40) est associé, **et en ce qu'**entre ledit dispositif de broyage (12) ou ledit compartiment de logement (40) et ladite partie fixe (18b), ou entre des composants respectifs solidaires de ceux-ci, des éléments de fin de course (41, 44) sont prévus configurés pour coopérer réciproquement et limiter le déplacement dudit dispositif de broyage (12) ou dudit compartiment de logement (40) par rapport à ladite partie fixe (18b), dans le but de limiter les surcharges accidentelles agissant sur lesdits moyens de pesage (70).

11. Appareil de broyage (100) selon l'une quelconque des revendications 7 à 10, **caractérisé en ce qu'**il comprend un compartiment de logement (40) pour ladite trémie (10) comprenant une porte (60) de recouvrement appropriée pour fermer sélectivement un canal de transit (59) pour lesdits grains vers ledit dispositif de broyage (12) lorsqu'aucune trémie (10) n'est insérée, dans lequel ladite porte (60) comprend de premiers éléments de mise en prise (61) appropriés pour venir en prise avec de seconds éléments de mise en prise (62) correspondants présents sur ledit récipient (14) de manière à ce qu'une rotation de ces derniers dans un sens ou dans l'autre implique un déplacement contextuel de ladite porte (60) entre un état ouvert et un état fermé.

12. Machine (200) de préparation de boissons au café, **caractérisée en ce qu'**elle comprend un appareil de broyage (100) selon l'une quelconque des revendications 7 à 11, une unité d'infusion (77) et au moins une interface utilisateur (79) munie d'au moins un dispositif d'affichage (80) au moyen duquel un utilisateur peut sélectionner une boisson déterminée, définir une ou plusieurs caractéristiques de celle-ci, ou sélectionner d'autres options ou modes de fonctionnement.

13. Procédé de broyage pour préparer une dose de substance pulvérulente à partir d'une substance de grain contenue dans une trémie (10) comprenant un récipient (14) pour les grains comportant une ouverture de sortie (17) et un fond (16) de fermeture rotatif par rapport audit récipient (14) et pourvu d'une ouverture de passage (20) qui, dans un état d'ouverture, s'aligne avec ladite ouverture de sortie (17), dans lequel ledit procédé comprend :
- la réception d'une indication concernant une valeur souhaitée d'une quantité desdits grains à broyer ;
- l'entraînement des moyens d'alimentation (13) de ladite trémie (10) pour acheminer de manière sélective ladite quantité de grains à travers ladite ouverture de sortie (17) et ladite ouverture de passage (20) vers un dispositif de broyage (12), dans lequel lesdits moyens d'alimentation (13) comprennent un élément d'alimentation (30) pouvant tourner autour d'un axe de rotation (X) incliné, par rapport à un axe vertical, d'un angle d'inclinaison (α) compris entre 3° et 20° et comprenant une lame unique (34) ;
- la détection d'une valeur de la quantité de grains acheminés par lesdits moyens d'alimentation (13) au moyen de moyens de détection (68) ;
- l'arrêt desdits moyens d'alimentation (13) lorsque la quantité de grains acheminés correspond à ladite valeur souhaitée ;
- l'activation dudit dispositif de broyage (12) pour broyer ladite quantité de grains en poudre.

14. Procédé de broyage selon la revendication 13, **caractérisé en ce qu'**il prévoit de positionner ladite trémie (10) dans un compartiment de logement (40) et de faire tourner ledit récipient (14) par rapport audit fond (16) afin de serrer ladite trémie (10) dans ledit compartiment de logement (40) et d'ouvrir ladite ouverture de sortie (17), dans lequel la rotation dudit récipient (14) implique un déplacement contextuel d'une porte (60) de recouvrement recouvrant ledit compartiment de logement (40) afin d'ouvrir et de fermer sélectivement un canal de transit (59) pour les grains vers ledit dispositif de broyage (12).

15. Procédé de broyage selon la revendication 13 ou 14, **caractérisé en ce qu'**il comprend une étape de contrôle pour vérifier s'il reste une quantité résiduelle desdits grains dans ledit dispositif de broyage (12) ou si la quantité totale desdits grains acheminés a été complètement broyée, avant d'éteindre ledit dispositif de broyage (12).

16. Procédé de broyage selon l'une quelconque des revendications 13 à 15, **caractérisé en ce que** ladite étape de détection d'une valeur de la quantité de grains acheminés par lesdits moyens d'alimentation (13) comprend :
- le pesage, de manière sensiblement continue, d'une valeur instantanée de ladite quantité de grains acheminés par lesdits moyens d'alimentation (13) ;
- la comparaison de ladite valeur instantanée mesurée avec ladite valeur souhaitée et, si elles coïncident, l'arrêt desdits moyens d'alimentation (13).

17. Procédé de broyage selon l'une quelconque des revendications 13 à 16, **caractérisé en ce que** ladite étape de détection d'une valeur de la quantité de grains acheminés par lesdits moyens d'alimentation (13) comprend :
- la détection de la position d'un élément d'alimentation (30) desdits moyens d'alimentation (13) au moyen d'au moins un capteur de position (69) avant l'entraînement desdits moyens d'alimentation (13) ;
- l'entraînement desdits moyens d'alimentation (13) de telle sorte que ledit élément d'alimentation (30) effectue un nombre de tours approprié pour acheminer ladite valeur souhaitée de grains.

18. Procédé de préparation d'une boisson avec une machine (200) selon la revendication 12, **caractérisé en ce qu'**il est capable de :
- recevoir une commande pour la préparation d'une boisson sélectionnée dans une machine (200) de préparation de boissons, déterminant une quantité de grains nécessaire et suffisante pour préparer ladite boisson sélectionnée et exécuter :
- une étape de préparation d'une dose de substance pulvérulente dans laquelle des moyens d'alimentation (13), disposés à l'intérieur d'une trémie (10) associée à ladite machine (200), sont entraînés pour acheminer de manière sélective ladite quantité de grains vers un dispositif de broyage (12) ;
- une étape, simultanée avec la précédente, dans laquelle des moyens de détection (68) détectent une valeur de ladite quantité desdits grains acheminés par lesdits moyens d'alimentation (13), et envoient un signal relatif à ladite valeur détectée à une unité de contrôle (75) qui la compare à des valeurs prédéfinies relatives à ladite boisson sélectionnée stockée dans un dispositif de stockage (76) ;
- une étape dans laquelle, lorsque ladite valeur détectée correspond à la valeur prédéfinie relative à ladite boisson sélectionnée, lesdits moyens d'alimentation (13) sont arrêtés et ledit dispositif de broyage (12) broie complètement ladite quantité de grains afin d'obtenir ladite substance pulvérulente à acheminer vers une unité d'infusion (77) ;
- une étape dans laquelle ladite poudre est soumise à une infusion et ladite boisson est distribuée.
